# EUROPÄISCHE PATENTSCHRIFT

(11) **EP 2 386 199 B1**
(45) Veröffentlichungstag und Bekanntmachung des Hinweises auf die Patenterteilung: **05.06.2013**
(21) Anmeldenummer: 11003674.6
(22) Anmeldetag: 05.05.2011
(51) Int. Cl.: A01D 34/66

(54) **Mähmaschine**
Mowing machine
Faucheuse

(30) Priorität: 12.05.2010 DE 102010020431
(43) Veröffentlichungstag der Anmeldung: 16.11.2011
(73) Patentinhaber: Maschinenfabrik Bernard Krone GmbH, 48480 Spelle (DE)
(72) Erfinder: Horstmann, Josef, Dr.-Ing., 49479 Ibbenbüren (DE); Afting, Andreas, 48488 Emsbüren (DE)

(56) Entgegenhaltungen:
- DE-A1- 19 813 233
- DE-U1-202007 014 320
- US-A- 4 723 396

## Beschreibung

Die vorliegende Erfindung bezieht sich auf eine Mähmaschine gemäß dem Oberbegriff des Anspruchs 1. Derartige bekannte Mähmaschinen werden bevorzugt zum Ernten von Gras oder dergleichen landwirtschaftlichen halmartigen Erntegütern eingesetzt.

Im Betrieb können sie beidseitig, oder aber an eine heckseitige Dreipunkthubeinrichtung eines landwirtschaftlichen Trägerfahrzeugs, wie beispielsweise eines landwirtschaftlichen Ackerschleppers angekoppelt werden, wobei ihre rotierenden Schneidorgane von dem Trägerfahrzeug aus angetrieben werden.

Eine Mähmaschine mit den vorstehend aufgeführten Merkmalen ist in der

DE 198 13 233 A1 offenbart. Im Ernteeinsatz wird die Mäheinrichtung derartiger Mähmaschinen mit großer Geschwindigkeit über eine Feld- oder Wiesenfläche bewegt, wobei die Mäheinrichtung über die Bodenoberfläche bzw. über die Grasnarbe gleitet.

Da es in der Praxis jedoch häufiger vorkommt, dass zu mähende Feld- oder Wiesenflächen Steine oder andere Hindernisse enthalten, ist es bei den hohen Fahrgeschwindigkeiten vorteilhaft, die Mähmaschinen mit Sicherheitseinrichtungen zu versehen, welche es verhindern sollen, dass durch die Kollision mit den Hindernissen Beschädigungen an der Mäheinrichtung entstehen. Die in der DE 198 13 233 A1 offenbarte Mähmaschine weist nachteilig keine derartige Sicherheitseinrichtung auf, welche auch als Anfahrschutz oder als Pfahlsicherung bezeichnet werden.

Aus der DE 28 25 678 A1 ist ein Aufhängungsmechanismus zum Ankuppeln insbesondere einer Mähmaschine an die Dreipunktbefestigung eines Schleppers mit einer solchen Sicherheitseinrichtung bekannt geworden, der aus einem Schwenkbalken besteht, dessen erstes Ende außerhalb des Trägerfahrzeuges hervorragt und zur Aufnahme eines Feldgerätes dient, während das zweite Ende des Schwenkbalkens dafür vorgesehen ist, mit einem oberen und mit einem unteren, an der dem Feldgerät abgewandten Seite befindlichen Arm der Dreipunktbefestigung des Trägerfahrzeuges verbunden zu werden. An der dem Feldgerät zugewandten Seite der Dreipunktbefestigung ist eine vorwärtsragende Konsole angebracht, an der der zweite untere Arm der Dreipunktbefestigung zur Anlage kommt und dort auch unter normalen Einsatzverhältnissen durch den Einfluss einer Druckfeder verbleiben soll. Lediglich beim Auftreffen auf einen Stein oder dergleichen Hindernis eines beispielsweise als Mäheinrichtung ausgebildeten Feldgerätes soll es zu einem Abheben des der Mäheinrichtung zugewandten Armes der Dreipunktbefestigung von der vorwärtsragenden Konsole und damit zu einem Zurückschwenken des als Mäheinrichtung ausgeführten Feldgerätes kommen. Die vorstehend beschriebene Sicherheitseinrichtung ist jedoch mit dem Mangel behaftet, dass aufgrund von unterschiedlichen Reibungsverhältnissen im praktischen Einsatz eines als Mäheinrichtung ausgebildeten Feldgerätes zwischen der Bodenoberfläche und der Mäheinrichtung eine exakte Einstellung der Federkraft nicht möglich ist und sich dadurch eine korrekte Arbeits- und Betriebsstellung der Mäheinrichtung nicht einstellen lässt. Die Mäheinrichtung pendelt folglich immer zwischen einer theoretisch vorgesehenen Arbeits- und Betriebsstellung und einer zurück geschwenkten Stellung hin und her, so dass dadurch ein sauberes und zufriedenstellendes Mähergebnis nicht erreichbar ist.

Das aus der DE 198 13 233 A1 bekannte Mähwerk wird in der Offenlegungsschrift

DE 101 49 364 A1 in einer durch eine Anfahrsicherung erweiterten Ausführung vorgestellt. Gemäß der dort beschriebenen Erfindung wird eine Sicherheitseinrichtung zum Schutz einer in der Arbeits- und Betriebsstellung seitlich von einem Trägerfahrzeug geführten Mäheinrichtung vor Beschädigungen durch Steine oder dgl. Hindernisse vorgeschlagen, welche in eine Dreipunktanbauvorrichtung der Mähmaschine integriert ist und dadurch die an Ober- und Unterlenkern befindlichen Kugelgelenke einer Hubeinrichtung des Trägerfahrzeuges als Schwenkgelenke nutzt. Dazu ist es nach der Erfindung vorgesehen, die Mäheinrichtung an einem ersten Ende eines Tragbalkens schwenkbar zu haltern, während am zweiten Ende des Tragbalkens eine Dreipunktanbauvorrichtung mit Anlenkstellen für Ober- und Unterlenker angebracht ist, wobei die an der der Mäheinrichtung abgewandten Seite des Tragbalkens befindliche Anlenkstelle derartig nachgiebig mit der Dreipunktanbauvorrichtung verbunden ist, dass beim Auftreffen der Mäheinrichtung auf ein Hindernis bei der Bewegung in Fahrt- und Arbeitsrichtung eine Schwenkbewegung der Mäheinrichtung in einer der Fahrt- und Arbeitsrichtung entgegengesetzten Richtung und ein Anheben des in Bezug zur Fahrt-und Arbeitsrichtung vorderen Bereiches der Mäheinrichtung (Kippen) eingeleitet wird. Das die Verbindung zwischen der Anlenkstelle und der Dreipunktanbauvorrichtung erst beim Überschreiten einer vorbestimmten Haltekraft gelöst wird, bewirkt dabei, dass die Mäheinrichtung im praktischen Einsatz stets in der vorgesehenen Arbeits- und Betriebsstellung gehalten wird und dadurch optimale Mähergebnisse gewährleistet werden können. Diese vorteilhafte Sicherheitseinrichtung hat jedoch seinen Preis. Diverse zusätzliche Bauteile und konstruktiv aufwändige Gelenkpunkte, welche aufgrund des langen Hebelarms zum Mähholm entsprechend stark dimensioniert werden müssen, sind dazu erforderlich und erhöhen den Preis der Maschine ebenso wie bei bisher bekannten Anfahreinrichtungen.

Aufgabe der Erfindung ist es daher, eine Mähmaschine der vorstehend angegebenen Art zu schaffen, welche sich durch eine Sicherheitseinrichtung auszeichnet, die in einer konstruktiv besonders einfachen und kostengünstigen Ausbildung in zuverlässiger Art und Weise und ohne Beeinträchtigung des Mähergebnisses ein Überwinden von Steinen oder dgl. Hindernissen auf der zu bearbeitenden Feld- oder Wiesenfläche ohne Beschädigungen ermöglicht.

Bei einer Mähmaschine zum Ernten von Gras oder dgl. Erntegüter gemäß der Erfindung wird eine Sicherheitseinrichtung zum Schutz einer in der Arbeits- und Betriebsstellung seitlich von einem Trägerfahrzeug geführten Mäheinrichtung vor Beschädigungen durch Steine oder dgl. Hindernisse vorgeschlagen, welche in einer konstruktiv einfachen und kostengünstigen Art und Weise in den Tragarm der Mäheinrichtung derart integriert ist, dass sie einen Teil des mehrteiligen Tragarms bildet. Gegenüber der aus der DE 198 13 233 A1 bekannten Maschine, wurde dem Tragarm lediglich an seinem äußeren, dem Schlepper abgewandtem Ende, ein Tragarmteil hinzugefügt, welches mit dem an ihm anschließendem Tragarmteil durch eine Gelenkverbindung verbunden ist. Diese Gelenkverbindung weist erfindungsgemäß und vorteilhaft eine zumindest annähernd quer zur Fahrt- und Arbeitsrichtung liegende Schwenkachse auf. Eine andersartige Gelenkverbindung an dieser Stelle, wie beispielsweise ein Kugelgelenk, wäre auch denkbar, bedingt aber die zusätzliche Anbringung eines Stützlenkers zur Aufnahme der Querkräfte und ist somit zumindest wirtschaftlich nachteilig.

Das neue zusätzliche Tragarmteil weist an seinem äußeren Ende eine Gelenkverbindung auf, an der die Mäheinrichtung zumindest annähernd in ihrem Schwerpunkt aufgehängt ist.

Für eine optimale Funktion als Sicherheitseinrichtung ist das äußere Tragarmteil dabei in seiner Längserstreckung annähernd vertikal ausgerichtet, wobei eine leichte Schrägstellung entgegen der Fahrt- und Arbeitsrichtung vorteilhaft ist. In dieser Stellung ist das Tragarmteil (Sicherheitsarm) gegenüber dem benachbarten Tragarmteil derart festgesetzt, dass seine Verschwenkung um die quer liegende Verbindungsachse zum benachbarten Tragarmteil unterbunden ist. Die Fixierung des Sicherheitsarms ist erfindungsgemäß derart ausgeführt, das sie ab einer voreinstellbaren Kraft, die die Mäheinrichtung im Mähbetrieb auf sie ausübt, die Verschwenkmöglichkeit des äußeren Tragarmteils um die Querachse freigibt, wodurch die Mäheinrichtung eine Bewegung entgegen der Arbeitsrichtung und nach oben ausführen kann und somit bei Auftreffen auf ein Hindernis diesem schadlos ausweicht.

Die Fixiereinrichtung kann sowohl formschlüssig als auch kraftschlüssig ausgeführt sein, wobei eine formschlüssige Ausführung, beispielsweise mit einer federbelasteten Klinke, in mehrfacher Hinsicht besonders vorteilhaft ist. Zum einen lässt sich die Auslösekraft einer federbelasteten Klinke gut berechnen und feinfühlig und wiederholsicher einstellen, zum anderen bietet diese Lösung den Vorteil, dass nach Auslösung der Sicherheitseinrichtung alleinig durch kurzes Anheben des Tragarmes, wie es beispielsweise für die Vorgewendestellung notwendig ist, die Gewichtskraft der an dem Sicherheitsarm hängendem Mäheinrichtung diesen wieder in seine nach unten gerichteten Grundstellung zieht und dabei die Klinke wieder einrasten läst.

Außer der zuvor beschriebenen Fixier- und Auslöseeinrichtung der Sicherheitseinrichtung einer Mähmaschine nach der Erfindung sind auch noch weitere Ausführungsformen wie beispielsweise mit Abscherstiften oder Schrauben denkbar aber nicht so vorteilhaft. Gegenüber einer Halteeinrichtung, die das äußere Tragarmteil nur mittels eines Kraftspeichers in seine Betriebstellung hält, wobei nachteilig im Betrieb kaum festzustellen ist, ob die Sicherheitseinrichtung anspricht und bei Ansprechen die Gegenkraft auf das Tragarmteil durch den Kraftspeicher bei zunehmenden Schwenkwinkel ansteigt, bietet die vorgeschlagene Lösung der erfindungsgemäßen Mähmaschine einen ganz besonderen Vorteil. Nach dem Auslösen der Sperreinrichtung des äußeren Tragarmteils kann dieser frei, ohne eine Gegenkraft weiter verschwenken und somit der Mäheinrichtung eine Ausweichbewegung ermöglichen.

Dadurch, dass das zusätzliche äußere Tragarmteil mit der Blockier- / Festsetzeinrichtung für das Verbindungsgelenk zum vorangehenden Tragarmteil erfindungsgemäß als Sicherheitseinrichtung möglichst nahe an der vor Beschädigungen durch Hindernisse zu schützenden Mäheinrichtung angeordnet ist, sind die auf sie einwirkenden und zu übertragenden Kräfte wesentlich geringer als bei einer mit großem Abstand zur Mäheinrichtung im Bereich des Anbaubocks angeordneten Sicherheitseinrichtung.

Die vorteilhafte Anordnung der Sicherheitseinrichtung der erfindungsgemäßen Mähmaschine wirkt sich im positiven Sinne wesentlich auf die konstruktive Auslegung, auf das Gewicht und damit auf die Kosten aus.

Die zuvor als Einzelmaschine, links- oder rechtsseitig eines Trägerfahrzeugs zum Einsatz kommend, beschriebene erfindungsgemäße Mähmaschine kann selbstverständlich im Rahmen der Erfindung auch mehrfach als Mähwerkskombination oder an einem selbstfahrendem Großflächenmähwerk gleichzeitig eingesetzt werden.

Somit ist entsprechend der Aufgabe der Erfindung eine Mähmaschine bereitgestellt, welche sich durch eine Sicherheitseinrichtung auszeichnet, die in einer konstruktiv besonders einfachen und kostengünstigen Ausbildung in zuverlässiger Art und Weise und ohne Beeinträchtigung des Mähergebnisses ein Überwinden von Steinen oder dgl. Hindernissen auf der zu bearbeitenden Feld- oder Wiesenfläche ohne Beschädigungen ermöglicht.

Eine detaillierte Beschreibung des Gegenstandes der Erfindung erfolgt nun anhand eines Ausführungsbeispieles. In der Zeichnung stellt im Einzelnen dar:
- Fig.1: eine perspektivische Darstellung einer erfindungsgemäßen Mähmaschine in der Arbeits- und Betriebsstellung;
- Fig.2: eine perspektivische Darstellung der erfindungsgemäßen Mähmaschine nach einem Überlastungsfall mit einer in einer der Fahrt- und Arbeitsrichtung entgegengesetzt gerichteten Richtung verschwenkten Mäheinrichtung;
- Fig.3: eine vergrößerte Ansicht der Sicherheitseinrichtung der erfindungsgemäßen Mähmaschine;

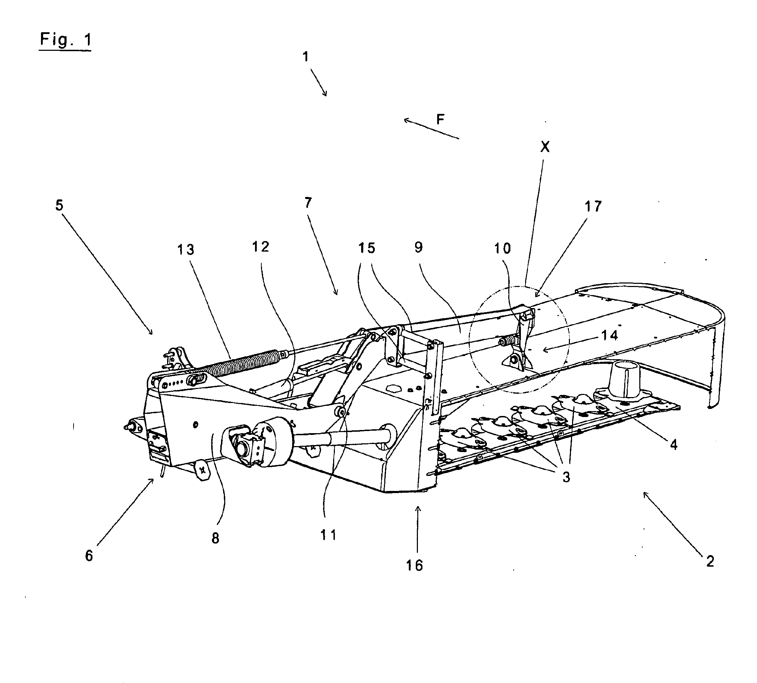

Ein Ausführungsbeispiel einer erfindungsgemäßen Mähmaschine ist in Fig. 1 näher veranschaulicht. Dabei handelt es sich um eine Mähmaschine 1 mit einer in der Arbeits-und Betriebsstellung seitlich von einem landwirtschaftlichen Trägerfahrzeug geführten Mäheinrichtung 2, welche eine Anzahl von um vertikale Achsen rotierenden Schneidorganen 3 umfaßt. Solche Maschinen dienen dem Ernten von Gras oder dgl. landwirtschaftlichen Erntegütern. Die Mäheinrichtung besteht dazu aus einem Mähholm 4, der der Lagerung und dem Antrieb der rotierenden Schneidorgane 3 dient. Zur Anpassung an verschiedenste Einsatzverhältnisse oder Erntegüter kann der Mäheinrichtung 2 eine bekannte, nicht dargestellte Aufbereitungseinrichtung nachgeordnet sein, welche dazu dient, das Erntegut stärker aufzuschließen, so dass dadurch der nachfolgende Trocknungsprozess verkürzt wird. Zur Verbindung der Mähmaschine mit der heckseitigen Hubeinrichtung eines landwirtschaftlichen Trägerfahrzeugs ist eine Dreipunktanbauvorrichtung 5 vorgesehen.

Im Rahmen der Erfindung ist es jedoch auch vorstellbar, abweichend von der vorstehend beschriebene Bauart, Mähmaschinen einzusetzen, die beidseitig von einem landwirtschaftlichen Trägerfahrzeug geführt werden. In diesem Zusammenhang ist beispielsweise ein Anbau einer Kombination von Mähmaschinen an einem landwirtschaftlichen Trägerfahrzeug zu erwähnen.

Weiter umfasst die Mähmaschine 1 des Ausführungsbeispiels eine Tragvorrichtung 6 mit einem in der Arbeits- und Betriebsstellung quer zur Fahrt- und Arbeitsrichtung F ausgerichteten mehrteiligen Tragarm 7, welcher aus einem starren inneren Tragarmteil 8, an dem unter anderem die Dreipunktanbauvorrichtung 5 anschließt und zwei weiteren Tragarmteilen 9, 10 gebildet ist, wobei die weiteren Tragarmteile 9, 10 um eine in Fahrt- und Arbeitsrichtung F gerichtete Achse 11 schwenkbar am inneren Tragarmteil 8 gelagert sind. Somit ist es möglich, durch eine Schwenkbewegung der Tragarmteile 9,10 um die Achse 11, die Mäheinrichtung 2 aus der horizontalen Arbeits- und Betriebsstellung in eine in etwa vertikal ausgerichtete Transportstellung und umgekehrt aus der Transportstellung zurück in die Arbeits- und Betriebsstellung zu überführen. Dazu kann, wie in Fig. 1 dargestellt, eine hydraulische Kolben-Zylinder-Anordnung 12 vorgesehen sein, die vom landwirtschaftlichen Trägerfahrzeug aus mit Druckmittel versorgt wird. Ferner ist der hydraulischen Kolben-Zylinder-Anordnung 12 eine Entlastungseinrichtung 13 zur Anpassung der Auflagekraft des Mähholmes 4 auf dem Erdboden zugeordnet.

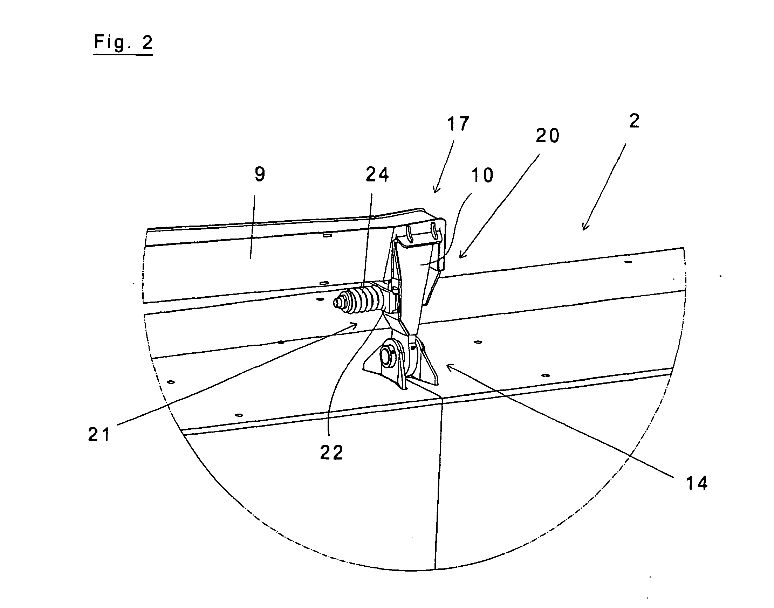

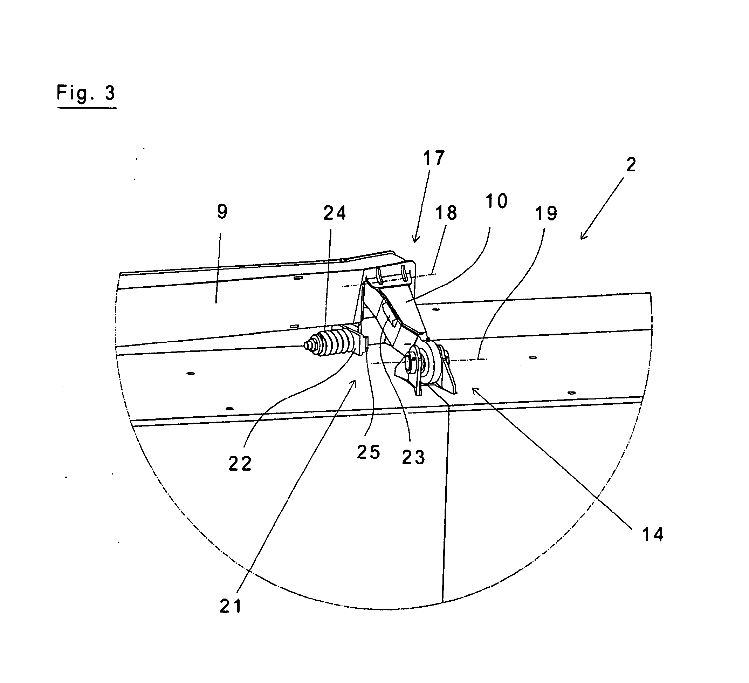

Weiterhin ist der Figur 1 und insbesondere auch den weiteren Figuren 2 und 3, welche eine vergrößerte Ansicht des Detailbereichs X aus Fig. 1 zeigen, zu entnehmen, dass die Verbindung zwischen dem äusseren Tragarmteil 10 des Tragarmes 7 und der Mäheinrichtung 2 von einer Gelenkverbindung 14 gebildet wird, welche eine in Fahrt-und Arbeitsrichtung F gerichtete Schwenkachse und zumindest eine in etwa quer zur Fahrt- und Arbeitsrichtung F gerichtete Schwenkachse aufweist. In einer besonders vorteilhaften und kostengünstigen Ausbildung ist die Gelenkverbindung 14, wie im Ausführungsbeispiel gezeigt, als ein Kugelgelenk ausgeführt. Zur Führung der Mäheinrichtung 2 sind der Gelenkverbindung 14 Lenker 15 zugeordnet, welche an einem Aufnahmestück des mittleren Tragarmteils 9 und an einem Aufnahmestück an einer Gehäusewand 16 eines der Fahrspur des landwirtschaftlichen Trägerfahrzeuges zugewandten, seitlichen Abschnittes der Mäheinrichtung 2 angelenkt sind. Zur schwenkbeweglichen Lagerung der Lenker 15 sind die Lenker endseitig ebenfalls mit Kugelgelenken versehen. Bei der zuvor beschriebenen Ausführung mit seitlichen Lenkern 15 ist bei Verwendung zumindest eines längenverstellbaren Lenkers gleichzeitig vorteilhaft eine Neigungsverstellung des Mähholmes 4 und damit eine Schnitthöheneinstellung möglich. Ansonsten können in anderen Ausführungsformen die seitlichen Lenker 15 auch beispielsweise durch eine vertikale Kulissenführung oder anderen Führungselementen ersetzt werden.

Durch die erfindungsgemäße Ausbildung des mehrteiligen Tragarms 7 mit einem äußeren Tragarmteil 10, welches mit dem benachbarten Tragarmteil 9 mittels eines Gelenks 17 mit einer zumindest annähernd quer zur Fahrt- und Arbeitsrichtung F ausgerichteten Schwenkachse 18 verbunden ist, erhält die ansonsten bekannte Maschine die kennzeichnenden Merkmale der Erfindung. Am anderen Ende des äußeren Tragarmteils 10 ist die Gelenkverbindung 14 zur Aufnahme der Mäheinrichtung 2 angeordnet. Durch die vorteilhafte Ausbildung der Gelenkverbindung 14 und deren Verbindung mit der Mäheinrichtung 2 in einem Bereich der Mäheinrichtung 2, in dem zumindest annähernd deren Schwerpunkt liegt, wird im Zusammenwirken mit den Lenkern 15 in vorteilhafter Weise erreicht, dass an der Gelenkverbindung 14 in erster

Linie die Gewichtskraft der Mäheinrichtung 2 aufgenommen wird, während die erforderlichen Führungskräfte (diese Führungskräfte ergeben sich aus den Boden- und Mähwiderständen der Mäheinrichtung 2) von den in einem möglichst großen Wirkabstand zur Gelenkverbindung 14 angeordneten Lenkern 15 aufgebracht werden. Dadurch ergibt sich eine optimale Führung der Mäheinrichtung 2, wobei außerdem die von den Lenkern 15 aufzunehmenden Führungskräfte möglichst gering und somit deren konstruktive Abmessungen klein gehalten werden können.

Da somit die auf das äußere Tragarmteil 10 wirkenden Betriebskräfte relativ gering sind, übernimmt es erfindungsgemäß zusätzlich zu seiner Tragfunktion die Funktion als Sicherheitseinrichtung 20 zur Vermeidung von Schäden an der Mäheinrichtung 2 bei Kollisionen mit Hindernissen. Aufgrund der im Verhältnis zu anderen bekannten, beispielsweise im Bereich der Dreipunktanbauvorrichtung angeordneten Sicherheitseinrichtungen, geringen aufzunehmenden Kräfte konnte somit mit geringem konstruktiven Aufwand und Materialaufwand eine kostengünstige Sicherheitseinrichtung 20 geschaffen werden.

Wie in Fig. 1 und Fig. 2 dargestellt ist, hat das Tragarmteil 10 in der Betriebstellung der Mäheinrichtung 2 eine annähernd vertikale Ausrichtung, wobei vorteilhaft die Mittelachse 19 der Gelenkverbindung 14 in Fahrt- und Arbeitsrichtung F gesehen, etwas hinter der Schwenkachse 18 des Gelenks 17 liegt und die Achsen 18, 19 dabei zumindest annähernd parallel zueinander und quer zur Fahrt- und Arbeitsrichtung F ausgerichtet sind. Das Tragarmteil 10 ist dabei in dieser Position gegenüber dem Tragarmteil 9 durch eine Sperreinrichtung 21 in seiner Bewegung um die Schwenkachse 18 festgesetzt. Die Sperreinrichtung 21, welche im Ausführungsbeispiel aus einem federbelasteten Rasthebel 22, einem Raststück 23 und einer Druckfeder 24 besteht, ist durch die veränderbare Vorspannung der Druckfeder 24 so eingestellt, dass sie im normalen Arbeitsbetrieb der Mähmaschine 1 ein Verschwenken der Tragarmteile 9 und 10 relativ zueinander um die Schwenkachse 18 unterbindet.

Bei Überschreiten einer durch die Mäheinrichtung 2 über die Gelenkverbindung 14 auf das Tragarmteil 10 in Richtung entgegen der Fahrt- und Arbeitsrichtung F gerichteten voreingestellten Auslösekraft gibt die Sperreinrichtung 21 jedoch die Bewegung frei. Das bewirkt, dass das Tragarmteil 10 um die Schwenkachse 18 relativ zum Tragarmteil 9 nach hinten, entgegen der Fahrt- und Arbeitsrichtung F und gleichzeitig nach oben verschwenkt (Fig. 3) und dabei die mit ihm über die Gelenkverbindung 14 verbundene Mäheinrichtung 2 ebenfalls entsprechende Bewegungen ausführt.

Durch diese nach hinten und oben gerichtete freigegebene Bewegungsmöglichkeit der Mäheinrichtung 2 durch das Auslösen der Sperreinrichtung 21, wird der Mäheinrichtung 2 ermöglicht, einem Hindernis, welches durch Kollision mit der Mäheinrichtung 2 zu der Überschreitung der Auslösekraft geführt hat, auszuweichen und somit Schaden vermieden.

Fig. 3 zeigt im Detail die ausgelöste Sicherheitseinrichtung 20 mit dem als Folge verschwenktem Tragarmteil 10 in Ausweichstellung der Mäheinrichtung 2. Deutlich ist hier das Raststück 23 der Sperreinrichtung 21 zu erkennen, welches im eingerasteten Zustand der Sperreinrichtung 21 von einem Ansatz 25 am Rasthebel 22 gegen die voreingestellte Federkraft der Druckfeder 24 überwunden werden muss, um ein Auslösen zu bewirken. Sowohl der Ansatz 25 am Rasthebel 22 als auch das Raststück 23 weisen beidseitig aufeinander abgestimmte Schrägen auf, die das Auslösen und auch das Wiedereinrasten berechenbar machen und den Verschleiß minimieren. Das Wiedereinrasten der Sicherheitseinrichtung 20 geschieht besonders vorteilhaft durch alleiniges Anheben des Tragarms 7 mittels der Kolben- Zylinder- Anordnung 12 fernbedienbar vom Trägerfahrzeug aus, wodurch die Gewichtskraft der Mäheinrichtung 2 das Tragarmteil 10 in die nach unten gerichtete Grundstellung zieht und dabei der Ansatz 25 des Rasthebels 22 über das Raststück 23 gleitet und hinter diesem einrastet und somit das Tragarmteil 10 wieder in der Betriebsstellung sichert. Durch einfache Veränderung der Vorspannung der Druckfeder 24 kann die Ansprechschwelle (Auslösekraft) der Sicherheitseinrichtung 20 verschiedenen Betriebsbedingungen angepasst werden. Eine Überlastsicherung in der zuvor beschriebenen Ausführung mit einer federbelasteten Rastklinke, hat sich bereits bei diversen bisher bekannten Anfahrsicherungen als vorteilhaft erwiesen.

Andere Ausführungen von Auslöseeinrichtungen, die die Schwenkbewegung des Tragarmteils 10 bei einer bestimmten vorgebbaren Kraft freigeben, beispielsweise mit Scherstiften oder Schrauben oder mit anderen Kraftspeichern als einer Druckfeder 24 sind an dieser Stelle als Einrichtung zur Festsetzung des Tragarmteils 10 in der Betriebsstellung denkbar, aber weniger vorteilhaft.

## Patentansprüche

1. Mähmaschine, mit zumindest einer in einer Arbeits- und Betriebsstellung seitlich von einem landwirtschaftlichem Trägerfahrzeug geführten Mäheinrichtung (2), die eine Anzahl um jeweils eine in etwa vertikale Achse rotierende Schneidorgane (3) umfasst, sowie mit einer Tragvorrichtung (6), die einen zumindest zweiteiligen Tragarm (7) aufweist, an dessen äußeren Tragarmteil (10) endseitig mittels einer zumindest zwei Schwenkachsen aufweisenden Gelenkverbindung (14) die Mäheinrichtung (2) in etwa mittig im Schwerpunkt gehaltert ist, wobei der Gelenkverbindung (14) weitere Führungselemente (15) zugeordnet sind, welche zwischen einem seitlichen Abschnitt der Mäheinrichtung (2) und dem Tragarm (7) angeordnet sind, **dadurch gekennzeichnet, dass** das äußere Tragarmteil (10), welches mit dem benachbarten Tragarmteil schwenkbeweglich um eine in der Arbeits- und Betriebsstellung zumindest annähernd quer zur Fahrt- und Arbeitsrichtung ausgerichteten Schwenkachse (18) verbunden ist, während des normalen Arbeitsbetriebes der Mähmaschine in seiner Längserstreckung eine zumindest annähernd vertikale Ausrichtung einnimmt und die Schwenkbeweglichkeit zu dem benachbarten Tragarmteil (9) um die Schwenkachse (18) durch eine betriebswiderstandsabhängige Sperreinrichtung (21) unterbunden ist.

2. Mähmaschine (1) nach Anspruch 1, **dadurch gekennzeichnet, dass** die Sperrwirkung der Sperreinrichtung (21) bei einer definierten auf die Mäheinrichtung (2) einwirkenden Kraft überwunden wird, wobei gleichzeitig die Verschwenkbarkeit des äußeren Tragarmteils (10) zu seinem benachbartem Tragarmteil (9) um die Schwenkachse (18) freigegeben wird.

3. Mähmaschine (1) nach Anspruch 1 oder 2, **dadurch gekennzeichnet, dass** durch das Verschwenken des äußeren Tragarmteils (10) um die Schwenkachse (18) die Mäheinrichtung (2) eine Bewegung vollzieht, die zumindest teilweise nach hinten entgegen der Fahrt- und Arbeitsrichtung (F) und nach oben gerichtet ist.

4. Mähmaschine (1) nach einem oder mehreren der vorhergehenden Ansprüche, **dadurch gekennzeichnet, dass** die notwendige Kraft zur Überwindung der Sperrwirkung der Sperreinrichtung (21) unter anderem zur Anpassung an unterschiedliche Betriebsbedingungen einstellbar ist.

## Claims

1. Mower, having at least one mowing arrangement (2) which, in a working and operating position, is guided at the side of an agricultural carrier vehicle and which comprises a plurality of cutting members (3) rotating on respective approximately vertical axes, and having a support arrangement (6) which has a support arm (7) in at least two parts, at the end of the outer (10) of which support arm parts the mowing arrangement (2) is mounted approximately at its centre on its centre of gravity by means of a jointed connection (14) having at least two axes of pivot, the jointed connection (14) having associated with it further guiding members (15) which are arranged between a lateral portion of the mowing arrangement (2) and the support arm (7), **characterised in that** the outer support arm part (10) is connected to the adjacent support arm part to be movable by pivoting on an axis of pivot (18) which, in the working and operating position, is aligned at least approximately transversely to the direction of travel and working, and the longitudinal extent of the said outer support arm part (10) assumes an at least approximately vertical alignment during the normal working operation of the mower, and the mobility in pivoting relative to the adjacent support arm part (9) on the axis of pivot (18) is prevented by a blocking arrangement (21) which is dependent on resistance to its operation.

2. Mower (1) according to claim 1, **characterised in that** the blocking action of the blocking arrangement (21) is overcome when a defined force acts on the
mowing arrangement (2), the ability of the outer support arm part (10) to pivot relative to the adjacent support arm part (9) on the axis of pivot (18) being released at the same time.

3. Mower (1) according to claim 1 or 2, **characterised in that** the pivoting of the outer support arm part (10) on the axis of pivot (18) causes the mowing arrangement (2) to make a movement at least part of which is directed backwards in the opposite direction to the direction of travel and working (F) and upwards.

4. Mower (1) according to one or more of the preceding claims, **characterised in that** the force needed to overcome the blocking action of the blocking arrangement (21) can be set in order to, amongst other things, make an adjustment to different operating conditions.

## Revendications

1. Faucheuse comportant au moins un dispositif tondeur (2) guidé latéralement dans une position de travail et de service par un véhicule agricole porteur, et qui est équipé d'une série d'organes de coupe (3) respectivement mobiles en rotation autour d'un axe essentiellement vertical, ainsi qu'un dispositif porteur (6) équipé d'un bras porteur (7) au moins en deux parties, le dispositif tondeur (2) étant maintenu en étant essentiellement cintré sur son centre de gravité, à l'extrémité de la partie externe (10) du bras porteur, au moyen d'une liaison articulée (14) équipée d'au moins de deux axes de pivotement, à la liaison articulée (14) étant associée d'autres éléments de guidage (15) montés entre un tronçon latéral du dispositif tondeur (2) et le bras porteur (7), **caractérisée en ce que**
la partie externe (10) du bras porteur qui est reliée à la partie voisine du bras porteur voisine en pouvant pivoter autour d'un axe de pivotement (18) orienté, dans la position de travail et de service au moins essentiellement transversalement à la direction de déplacement et de travail, prend, pendant le fonctionnement de travail normal de la faucheuse, par son extension longitudinale, une orientation au moins approximativement verticale, et sa possibilité de pivotement autour de l'axe de pivotement (18) par rapport à la partie voisine (9) du bras porteur est arrêtée par un dispositif de blocage (21) dépendant de la résistance au fonctionnement.

2. Faucheuse (1) conforme à la revendication 1,
**caractérisée en ce que**
l'action de blocage du dispositif de blocage (21) est surmontée en présence d'une force définie agissant sur le dispositif tondeur (2) et simultanément la possibilité de pivotement de la partie externe (10) du bras porteur (14) sur la partie voisine (9) du bras porteur autour de l'axe de pivotement (18) et libérée.

3. Faucheuse (1) conforme à la revendication 1 ou 2,
**caractérisée en ce que**
suite au pivotement de la partie externe (10) du bras porteur autour de l'axe de pivotement (18) le dispositif tondeur (2) exécute un mouvement dirigé au moins partiellement vers l'arrière à l'encontre du sens de déplacement et de travail (F) et vers le haut.

4. Faucheuse (1) conforme à au moins une des revendications précédentes,
**caractérisée en ce que**
la force nécessaire pour surmonter l'action de blocage du dispositif de blocage (21) peut être réglée notamment pour permettre son adaptation à différentes conditions de fonctionnement.
